Europäisches Patentamt

European Patent Office

Office européen des brevets

(11) Publication number: **0 356 525**
**A1**

## EUROPEAN PATENT APPLICATION
### published in accordance with Art. 158(3) EPC

(21) Application number: 89902286.7

(22) Date of filing: 08.02.89

(86) International application number: PCT/JP89/00125

(87) International publication number: WO 89/07551 (24.08.89 89/20)

(51) Int. Cl.⁵: **B65B 31/02**

(30) Priority: 09.02.88 JP 28138/88

(43) Date of publication of application: 07.03.90 Bulletin 90/10

(84) Designated Contracting States: **BE CH DE FR GB IT LI NL SE**

(71) Applicant: **Taiyo Fishery Co., Ltd.**
**1-2, 1-chome Otemachi**
**Chiyoda-ku Tokyo 100(JP)**

Applicant: **SHOWA DENKO KABUSHIKI KAISHA**
**10-12, Shiba Daimon 2-chome Minato-ku Tokyo 105(JP)**

(72) Inventor: **MARUYAMA, Minoru Taiyo Kenkyusho, Taiyo Fishery**
**2-9, 3-chome Tsukishima**
**Chuo-ku Tokyo 104 Tokyo 104(JP)**
Inventor: **TAKAHASHI, Takeshi Kawasaki Jushi Kenkyusho**
**Showa Denko K.K. 3-2, Chidorimachi Kawasaki-ku**
**Kawasaki-shi Kanagawa-ken 210(JP)**
Inventor: **TAKASE, Tsuyoshi Kabushiki Kaisha Showa Kouki**
**22-25, Kamedamachi Hakodate-shi Hokkaido 040(JP)**

(74) Representative: **Patentanwälte Grünecker, Kinkeldey, Stockmair & Partner**
**Maximilianstrasse 58**
**D-8000 München 22(DE)**

(54) **METHOD AND APPARATUS FOR VACUUM SEALING A PRECOOKED-FOOD CONTAINER.**

(57) This invention relates to a method of vacuum sealing a precooked-food container by fusion-welding a lid to a precooked-food container in a vacuum for sealing. The contents are put into a precooked-food container made of a resin, which has a joint comprising an aluminum foil at least one of the sides of which has a fusion weldable plastic laminated thereon and formed in such a manner that at least the plastic is positioned outside and which has an opening at the upper part thereof, and a

flanged sealing lid is fit onto the opening of the container. The aluminum foil of the joint is heated by high frequency induction in a vacuum so as to fusion-weld the flange and the joint of the container positioned inside the former with the plastic.

FIG.1

SPECIFICATION

# METHOD FOR VACUUM SEALING A RETORTING CAN CONTAINER
# AND APPARATUS THEREFOR

## TECHNICAL FIELD

This invention relates to a method and an apparatus for vacuum sealing a retorting can container, in which a lid is heat fused and attached to a retorting can container under vacuum in order to seal the can container.

## BACKGROUND ART

Heretofore, brick cans and aluminum cans have been used as retorting can containers. Such containers are usually filled therein with a content, then sealed, and then retort heated and sterilized. Therefore, it is very important for such containers to be sealed perfectly.

The conventional containers, in general, are sealed in such a manner as to wind tight a flange of the sealing portion.

However, the above-mentioned sealing method had such problems as that a high degree of technique was required in winding tight using a sealing device, and adjustment, maintenance, repairing, etc. of such apparatus were difficult.

It is therefore the object of the present invention to provide a method and an apparatus for vacuum sealing a

1

retorting can container, in which a retorting can container can be sealed with ease and with reliability.

DISCLOSURE OF THE INVENTION

The present invention could achieve the above-mentioned object by providing a method for vacuum sealing a retorting can container comprising filling a content into a retorting can container made of resin and in which an aluminum foil having a plastic able to be heat fused and laminated on at least one side of said aluminum foil. is used, said container having a jointed portion formed by placing said plastic at least at an outer side thereof, said container also having an opening portion at its upper portion; bringing a sealing lid having a flange portion into engagement with said opening portion of said container; high frequency induction heating said aluminum foil of said jointed portion under vacuum; and heat fusing said flange portion and said jointed portion of said container located at an inner side thereof together through said plastic.

Also, the present invention provides the following apparatus which is suitable for carrying out the method of the present invention.

An apparatus for vacuum sealing a retorting can container is characterized in including a vacuum chamber for sealing a retorting can container made of resin and in which an aluminum foil having a plastic able to be heat fused and laminated on at least one side of said aluminum foil is used, said container having a jointed portion formed by placing said plastic at least at an outer side thereof, said sealing being performed by filling a content into said retorting can container made of resin and having an opening portion at its upper portion, then bringing a sealing lid having a flange portion into engagement with said opening portion of said container, then high frequency induction heating said aluminum foil of said jointed portion under vacuum, and then heat fusing said flange portion and said jointed portion of said container located at an inner side thereof together through said plastic, said chamber having therein high frequency induction heating means which comprises a fixed high frequency oscillating primary coil and a rotatable disc-shaped high frequency oscillating secondary coil having a cooling function and disposed below said first coil, said chamber being also provided with a valve turret having a function for carrying said container, which is not yet sealed, into said chamber from an inlet passage and a function for carrying out said container, which is already sealed, to an outlet passage from said chamber while maintaining a vacuumed condition, said secondary coil being provided at its lower surface portion with a sealing pocket for permitting the flange portion of said lid engaged with said container to be engaged therein and high frequency in-

3

duction heating the aluminum foil of said jointed portion, said secondary coil being provided thereunder with lift means for lifting said container having said lid engaged therewith so as to bring the flange portion of said lid into engagement with said sealing pocket and pressing down, a feed turret for feeding said container, which is not yet sealed, to said lift means from said valve turret, and a discharge turret for feeding said container, which is already sealed, to said valve turret from said lift means.

BRIEF DESCRIPTION OF THE DRAWINGS

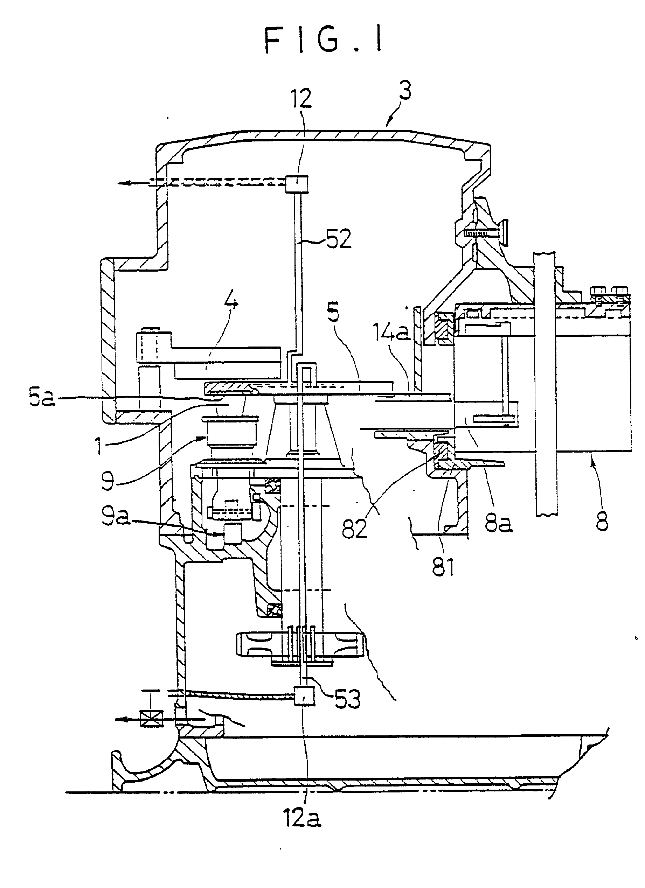

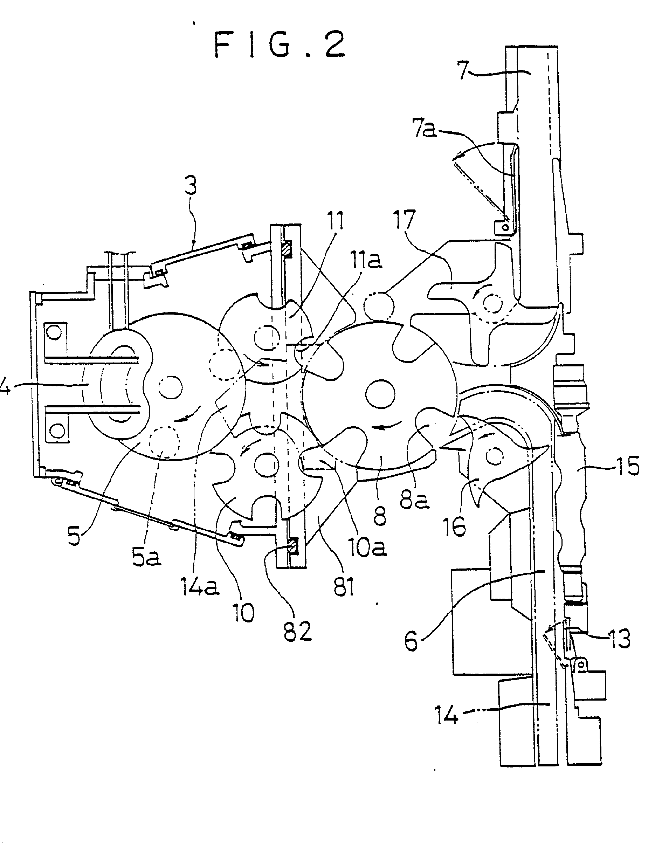

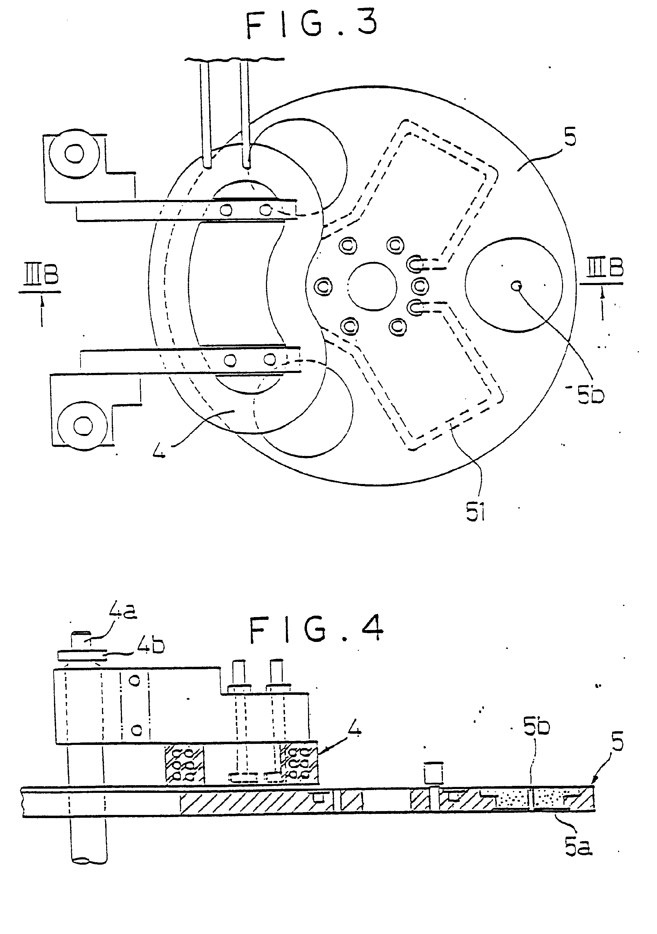

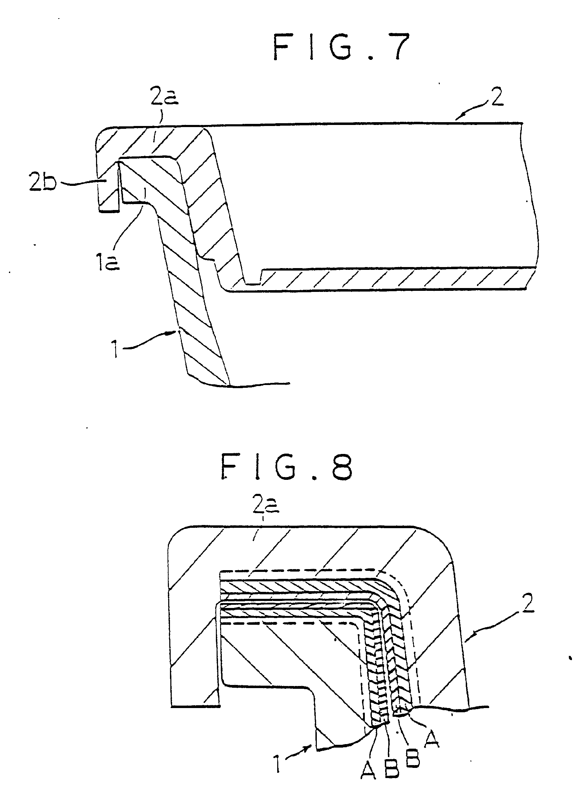

Fig. 1 is a vertical sectional view schematically showing an important portion of an apparatus for vacuum sealing a retorting can container according to one embodiment of the present invention, Fig. 2 is a cross sectional view schematically showing the above-mentioned apparatus, Fig. 3 is a plan view schematically showing a high frequency induction heating means, Fig. 4 is a sectional view taken on line IIIB-IIIB of Fig. 3, Figs. 5 and 6 are schematic explanatory views showing various states of switch means of the above-mentioned apparatus when the apparatus is automatically operated and manually operated, Fig. 7 is a partly sectional view schematically showing the above-mentioned container with which a lid is already engaged, and Fig. 8 is an enlarged partly sectional view showing an important portion of the above-mentioned container.

## BEST MODE FOR CARRYING OUT THE INVENTION

One preferred embodiment of an apparatus for vacuum sealing a retorting can container of the present invention illustrated in the drawings will be described hereunder in detail.

First, there will be described a retorting can container 1 to which a method of the present invention can be applied.

The container 1, as shown in Fig. 7, has a flange 1a at its opening end. A jointed portion for sealing the container 1 is formed in the vicinity of the opening end including the flange 1a. And, the opening end of the container 1, as illustrated in the figure, has a lid 2 engaged therewith. In the foregoing state, the container 1 is subjected to sealing. The lid 2 has a flange portion 2a continuous to a circumferential portion 2b extending downward and abutted against the flange 1a when the lid 2 is engaged with the opening end of the container 1. A jointed portion of the lid 2 is formed in the vicinity of the flange portion 2a. The main bodies of the container 1 and the lid 2 are made of resin. At least the above-mentioned jointed portions of both of them, as shown in Fig. 8, respectively have an aluminum foil A and a plastic B able to be heat fused and laminated to an outer side of the aluminum foil A. The container 1 and the lid 2 are manufactured by an injection molding method in which resin is charged into a predetermined

5

position of a metal die in a state where a film of a three layered-structure having a plastic able to be heat fused and laminated to the front and reverse surfaces of the aluminum is disposed. In the figure, the broken lines show the plastics able to be heat fused and integral with the container 1 or the lid 2.

As a resin for forming the container 1 and the lid 2, there can be listed a shock-proof polypropylene and the like. As a preferable thickness of such resin, there can be listed 0.3 to 3mm.

Also, as a thickness of the aluminum foil forming the jointed portions, 7 to $70\mu$ m is preferable. Furthermore, as a resin forming the plastic able to be heat fused and laminated to the aluminum foil, there can be listed a nonextensible polypropylene film. The thickness of such resin is preferably 10 to $200\mu$ m.

When the method of the present invention is to be carried out, first, a content (not shown) is filled into the container 1. Thereafter, the container 1 having the sealing lid 2 which has the flange portion 2a engaged with the opening portion located at an upper portion of the container 1 is carried in a vacuum sealing apparatus according to one embodiment as will be described hereinafter and then subjected to vacuum sealing.

The apparatus for vacuum sealing a retorting can con-

6

tainer according to one embodiment of the present invention includes a vacuum chamber 3 adapted to seal the container 1 under vacuum.

Inside of the chamber 3, high frequency induction heating means comprising a high frequency oscillating primary coil 4 fixed to the chamber 3 and a rotatable disc-shaped high frequency secondary coil 5 disposed beneath the primary coil 4 and having a cooling function. The secondary coil 5 is axially supported at its center and rotatable in the arrow direction as shown in Fig. 2.

Also, the chamber 3 is provided therein with a valve turret 8 which has a function for carrying the container 1, which is not yet sealed, into the chamber 3 from an inlet passage (field conveyor) 6 and a function for carrying out the container (not shown), which is already sealed, to an outlet passage 7 from the chamber 3, while maintaining the vacuumed condition. That is, this valve turret 8 is provided with a plurality of pockets 8a having a predetermined height and depth arranged at equal distances along its circumference and adapted to receive the containers which are before and after sealed. Also, the valve turret 8 is rotatable in the arrow direction and slidably air tight with a valve seal 81 so that the vacuumed state can be maintained within the chamber 3 even during its rotation. Accordingly, when the valve turret 8 with the containers 1, which are not yet sealed and received in its pockets 8a, is rotated in the arrow direction, the pockets 8a are automatically communicated with the interior of the chamber 3. Thus, the containers 1 can be carried into the chamber 3. It is to be noted that this valve seal 81 is mounted air tight with the chamber 3 through a seal tube 82.

And, concave-shaped sealing pockets 5a for permitting the flange portion 2a of the sealing lid 2 engaged with the container 1 to be inserted therein and adapted to high frequency induction heating the flange portion 2a are arranged on a lower surface portion of the secondary coil 5 at an equal distance about its axis. Also, lift means 9 adapted to lift up the container 1 having the lid 2 engaged thereon and permitting the flange portion 2a of the lid 2 to be engaged with the sealing pocket 5a so as to press is disposed beneath the secondary coil 5. This lift means 9 is caused to move upward and downward by a cam mechanism 9a in accordance with the rotation of the secondary coil 5. The flange portion 2a of the lid 2 engaged on the container 1 is correctly engaged with the sealing pocket 5a. In addition, a spring contained in the lift means 9 urges an upper portion of the container 1 against the sealing pocket 5a with a predetermined resilient force.

Also, a feed turret 10 for feeding the container 1, which is not yet sealed, to the lift means from the valve turret 8 and a discharge turret 11 for feeding the container, which is already sealed, to the valve turret 8 from the lift means 9 are disposed within the chamber 3. The feed turret 10 and the discharge turret 11 are provided with indents 10a and 11a, respectively, configurations of which are somewhat like the pocket 8a of the valve turret 8 in plan view so that the container 1 can be transferred in a predetermined direction in accordance with the rotation of the feed turret 10 and the discharge turret 11 in the arrow direction.

Next, there will be described in greater detail the apparatus for vacuum sealing the retorting can container according to the above-mentioned one embodiment.

The inlet passage 6 is provided with a dejector 13 as a mechanism for distinguishing and dejecting a container 1 having no sealing lid 2 from the line beforehand when such container 1 having no sealing lid 2 should be transferred to the inlet passage 6.

Also, upper guides 14 and 14a adapted to prevent the escaping or coming off of the sealing lid 2 from the container 1 when the container 1, which is not yet sealed, is transferred are disposed above the inlet passage 6 and within the chamber 3, respectively.

The outlet passage 7 is provided with a discharge stop deflecter 7a adapted to prevent a breaking accident of the container 1 which is occurrable when the outlet passage 7 is clogged with the containers 1. In this case, this apparatus is automatically stopped its operation.

Also, the secondary coil 5 is provided with a cooling water passage 51 formed therein, as shown in Fig. 3, in order to render a cooling function to the secondary coil 5. And, feeding of a cooling water to and discharging of a cooling water from the cooling water passage 51 are performed through a discharge pipe 52 and a water feeding pipe 53 connected with rotary joints 12 and 12a which are disposed above or beneath the axis of the secondary coil 5. Accordingly, the secondary coil 5 can be continuously maintained to be in a proper temperature even during the activation of the vacuum sealing device. The rotary joints 12 and 12a are respectively connected with a discharge pressure-proof pipe and a water feeding pressure-proof pipe extending outside the chamber 3, so that a cooling water can be fed and discharged.

Furthermore, the primary coil 4 and the secondary coil 5 which form the high frequency induction heating means will be described in greater detail with reference to Figs. 3 and 4. In accordance with the rotation of the secondary coil 5, the sealing pockets 5a arranged at equal distances on the secondary coil 5 pass in sequence beneath the primary coil 4 which is fixed. And, by an adjusting screw 4b provided to a support post 4a for fixing the primary coil 4, the distance between the primary coil 4 and the secondary coil 5 can be ad-

10

justed. Also, at the central position of the sealing pocket 5a of the secondary coil 5, an air extracting hole 5b is disposed so that the container, which is already sealed, can be escaped with ease.

Also, the vacuum sealing apparatus includes, for example, an automatic control function suitable for maintaining always in the best state the operating conditions such as degree of vacuum, etc. within the chamber 3. Regarding the degree of vacuum, there can be listed, for example, a maximum and minimum vacuum degree sensor. However, the apparatus is also provided with a safety control function for automatically stopping its operation when there occurs a case where the automatic control function is not enough to maintain the normal condition, such as, for example, when the degree of vacuum greatly deviates from a suitable range in the chamber 3 or when intolerable abnormal thing is taken place in temperature or in feeding pressure for feeding a cooling water to the secondary coil 5.

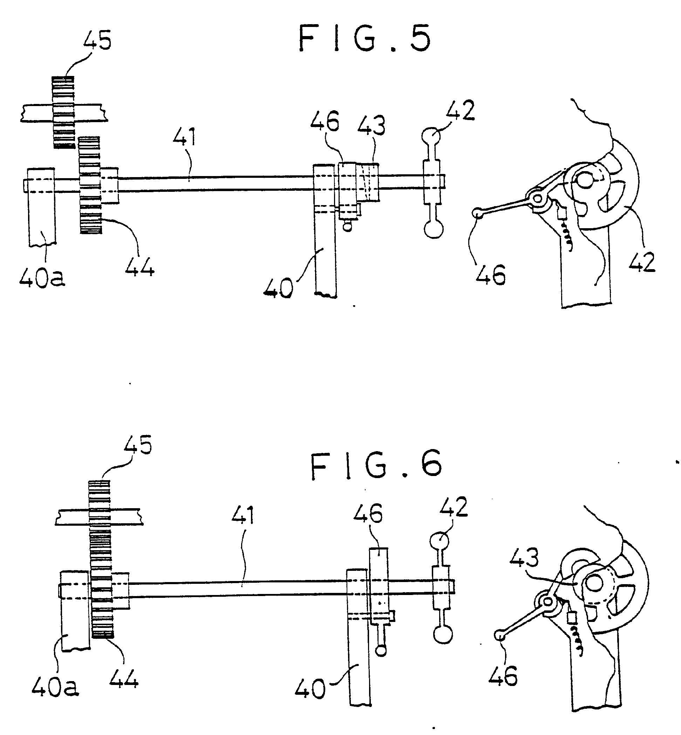

Also, the vacuum sealing apparatus includes an automatic-manual operation switch means as shown in Figs. 5 and 6. This works effectively when there occurs a case where the automatic control function is not enough to control the abnormal situation and the apparatus is stopped. This switch means will be described hereinafter in detail.

Figs. 5 and 6 respectively show the switch means of the

11

apparatus when the automatic operation and manual operation are undergoing. In the respective figures, the left-hand side is a generally front view and the right-hand side is a generally right side view, partly broken.

The switch means includes a hand wheel shaft 41 which is penetrated holes of two supporting members 40 and 40a which are located in position away from the other and slidable in the lateral direction in the figures. The hand wheel shaft 41 is provided with a hand wheel 42, a stopper 43 and a hand wheel gear 44 which are fixed thereto from the right-hand side in this order.

In Fig. 5, a drive gear 45 adapted to actuate the vacuum apparatus is proximate to but not meshed with the hand wheel gear 44. This state is maintained and fixed by a lock lever 46 removably inserted between the supporting member 40 and the stopper 43. In this way, under the automatic operating state of the vacuum sealing apparatus, no power can be transmitted from the hand wheel gear 44 to the drive gear 45.

On the other hand, in Fig. 6, the lock lever 46 is removed from between the supporting member 40 and the stopper 43 to release the locked-state, and the hand wheel shaft 41 is moved in the left-hand direction to form the meshing relation between the hand wheel gear 44 and the drive gear 45 as illustrated. Accordingly, by manually rotating the hand wheel 42, power can be transmitted to the drive gear 45 and

12

thus the vacuum sealing apparatus can be manually operated. In the apparatus, when the switch means is switched to the manual operating state, the automatic operation is prohibited by the automatic control mechanism so as to ensure the safety.

Next, the operation of this embodiment will be described and one preferred mode for carrying out the method of the present invention will also be described.

First, a content is filled into the retorting can container 1. Then, the lid 2 is transferred to and engaged with the opening portion of the container 1 by the feed means (not shown). Thereafter, the container 1 with the lid 2 engaged thereon is transferred to the inlet passage 6. A container 1 without having the lid 2 engaged thereon among containers 1 transferred to the inlet passage 6 is dejected from the line by the dejector 13.

In this way, as shown in Fig. 7, only the container 1 in which the lid 2 is surely engaged with the opening portion is transferred toward the valve turret 8 by the inlet passage 6, the container 1 reaches a timing screw 15, a predetermined timing is given to the container 1 by the timing screw 15, and then such container 1 is transferred to an inlet turret 16. And, the container 1 is pushed into the pocket 8a of the valve turret 8 by the inlet turret 16 which rotates in the arrow direction and received therein. In this way, the container 1 received in the pocket 8a is carried into the chamber 3 in accordance with the rotation of the valve turret 8 in the arrow direction. The lid 2 is prevented from escaping from the container 1 by the upper guide 14 until the container 1 is received in the pocket 8a. As soon as the container 1 is received in the chamber 3, air in the container 1 is removed and therefore the lid 2 is lifted up. Even in this case, however, the lid 2 is effectively prevented from escaping from the container 1 by the upper guide 14a which is disposed in the chamber 3. In this mode for carrying out the method of the present invention, as a circumferential portion 2b extending downward is formed on the lid 2, the escape of the lid 2 is more effectively prevented.

In this way, the container 1, which has been carried in the chamber 3, is further transferred to the lift means 9 by the next feed turret 10 and placed in a predetermined position there. Then, the lift means 9 rises to lift up the container 1 so that the flange portion 2a of the lid 2, which is engaged with the opening portion of the container 1, is brought into engagement with the sealing pocket 5a of the secondary coil 5 and its upper end is pressed with a predetermined strength. While maintaining this pressing state, the container 1 is allowed to pass beneath the primary coil 4 together with the secondary coil 5 which rotates in

14

the arrow direction. And, during the passage, a predetermined output of high frequency is oscillated from the primary coil 4 to high frequency conduction heat the aluminum foils A disposed at the jointed portions between the container 1 and the lid 2. As a result, the plastics B laminated on outer sides of the aluminum foils A are melted by heating. Then, the melted plastics B are cooled to heat weld the jointed portion of the container 1 to the jointed portion of the lid 2 thereby to attain the vacuum sealing of the container 1. It goes without saying that sealing conditions such as the high frequency oscillation output, speed of rotation of the secondary coil 5, pressing force by the lift means 9 can be properly set and adjusted when the high frequency induction heating is performed.

As described above, after the vacuum sealing of the container 1 is attained, the lift means 9 is lowered. As a result, the container 1, which is already sealed, is disengaged from the sealing pocket 5a and lowered.

The lowered container 1 is guided to the discharge turret 11 by a can guide (not shown) and then transferred to the valve turret 8 by the turret 11 and received again in the pocket 8a of the valve turret 8. The container 1, which has been received in the pocket 8a, is carried outside the chamber 3 in accordance with the rotation of the valve turret 8 in the arrow direction. In this way, the container 1, which

15

has been carried outside the chamber 3, is transferred to the outlet passage 7 by the outlet turret 17 and then transferred to the next process. Above-mentioned various actions are performed sequentially and automatically. In this way, a sequence of processes for vacuum sealing a retorting can container as one mode for carrying out the method of the present invention is finished.

As described in the foregoing, according to the method of the present invention, a vacuum sealing able to retort heating and sterilizing can be attained with ease and with reliability with respect to a retorting can container. Particularly, as the retorting can container has heat fusable plastic laminated on the entire jointed portion including the flange 1a, the plastic disposed in the vicinity of the flange 1a is also melted and covers the vicinity of the flange 1a. Accordingly, the sealing pressure proof of the container can be made much large. Also, according to the apparatus of the present invention, the method for vacuum sealing the retorting can container can be carried out with ease and with reliability, and consequutively and automatically.

One preferred embodiment of the present invention and one preferred mode for carrying out the method has been described. However, the present invention is not limited to the above-mentioned embodiment and mode. For example, in the above-mentioned mode, there has been shown one having a

16

main body made of resin and having a heat fusable plastic laminated on at least its jointed portion as the retorting can container to which the present invention is applied. However, the present invention is not limited to this retorting can container. The present invention can be applied to any things without any particular limitation as long as they use a heat fusable plastic laminated on at least its one side and its jointed portion is formed where at least the plastic is disposed at its outer side.

Also, in the above-mentioned mode for carrying out the method of the present invention, the jointed portions have been formed both on the container and the lid. However, the present invention is not limited to this and the jointed portion may be formed only on the container.

Also, as a safety control function, it is provided with functions for immediately stop the vacuum sealing apparatus when abnormal is occurred to a place which could be a cause for giving defect as merchandise to the retorting can container, which is already sealed, such as a valve side overload clutch for protecting the apparatus and enabling to perform its safe operation, the dejector or the discharge stop deflecter for dejecting the container without having the lid engaged thereon when, for example, the container is broken within the apparatus instead of being limited to a case where the degree of vacuum within the chamber, temperature or feed-

17

ing pressure of the cooling water become something abnormal.

POSSIBILITY OF INDUSTRIAL UTILIZATION

According to a method for vacuum sealing a retorting can container of the present invention, the retorting can container can be vacuum sealed in such strength as to be bear the retorting sterilization with ease and with reliability. Also, an apparatus for vacuum sealing a retorting can container of the present invention can achieve the vacuum sealing of the retorting can container with ease and with reliability, and consecutively and automatically.

## CLAIMS

1.    A method for vacuum sealing a retorting can container comprising filling a content into a retorting can container made of resin and in which an aluminum foil having a plastic able to be heat fused and laminated on at least one side of said aluminum foil is used, said container having a jointed portion formed by placing said plastic at least at an outer side thereof, said container also having an opening portion at its upper portion; bringing a sealing lid having a flange portion into engagement with said opening portion of said container; high frequency induction heating said aluminum foil of said jointed portion under vacuum; and heat fusing said flange portion and said jointed portion of said container located at an inner side thereof together through said plastic.

2.    The method for vacuum sealing a retorting can container as claimed in claim 1, wherein a main body of said sealing lid is made of resin and at least an inner side of said flange portion is provided with an aluminum foil on which a heat fusable plastic is laminated as such the plastic is arranged at an outer side thereof.

3.  An apparatus for vacuum sealing a retorting can container is characterized in including a vacuum chamber for sealing a retorting can container made of resin and in which an aluminum foil having a plastic·able to be heat fused and laminated on at least one side of said aluminum foil is used, said container having a jointed portion formed by placing said plastic at least at an outer side thereof, said sealing being performed by filling a content into said retorting can container made of resin and having an opening portion at its upper portion, then bringing a sealing lid having a flange portion into engagement with said opening portion of said container, then high frequency induction heating said aluminum foil of said jointed portion under vacuum, and then heat fusing said flange portion and said jointed portion of said container located at an inner side thereof together through said plastic, said chamber having therein high frequency induction heating means which comprises a fixed high frequency oscillating primary coil and a rotatable discshaped high frequency oscillating secondary coil having a cooling function and disposed below said first coil, said chamber being also provided with a valve turret having a function for carrying said container, which is not yet sealed, into said chamber from an inlet passage and a function for carrying out said container, which is already sealed, to an outlet passage from said chamber while maintaining a vacuumed condition, said secondary coil being provided at its lower surface portion with a sealing pocket for permitting the flange portion of said lid engaged with said container to be engaged therein and high frequency induction heating the aluminum foil of said jointed portion, said secondary coil being provided thereunder with lift means for lifting said container having said lid engaged therewith so as to bring the flange portion of said lid into engagement with said sealing pocket and pressing down, a feed turret for feeding said container, which is not yet sealed, to said lift means from said valve turret, and a discharge turret for feeding said container, which is already sealed, to said valve turret from said lift means.

4. The apparatus for vacuum sealing a retorting can container as claimed in claim 3, wherein a main body of said sealing lid is made of resin, and at least an inner side of

21

said flange portion is provided with an aluminum foil on which a heat fusable plastic is laminated as such that the plastic is arranged at an outer side thereof.

5. The apparatus for vacuum sealing a retorting can container as claimed in claim 3, wherein said secondary coil has a cooling passage therein, feeding and discharging a cooling water to and from said cooling passage is performed through a water feed pipe and a water discharge pipe which are connected with a rotary joint which is disposed at an upper part and a lower part of the axis of said secondary coil.

6. The apparatus for vacuum sealing a retorting can container as claimed in claim 3, wherein said inlet passage is provided with a dejector adapted to distinguish the container without having the sealing lid engaged thereon and dejecting the same from the line.

7. The apparatus for vacuum sealing a retorting can container as claimed in claim 3, wherein said inlet passage and said chamber are provided therein an upper guide adapted to hold the sealing lid which is engaged with said container when said container, which is not yet sealed, is transferred.

8. The apparatus for vacuum sealing a retorting can container as claimed in claim 3, wherein said vacuum sealing apparatus includes an automatic-manual operation switch means.

# F I G . I

# FIG.2

# FIG.3

# FIG.4

# F I G . 5

# F I G . 6

# FIG. 7

# FIG. 8

# INTERNATIONAL SEARCH REPORT

International Application No  PCT/JP89/00125

## I. CLASSIFICATION OF SUBJECT MATTER (if several classification symbols apply, indicate all) [6]

According to International Patent Classification (IPC) or to both National Classification and IPC

Int. Cl$^4$   B65B31/02

## II. FIELDS SEARCHED

| Minimum Documentation Searched [7] | |
|---|---|
| Classification System | Classification Symbols |
| IPC | B65B31/00-31/06, 51/10 |

| Documentation Searched other than Minimum Documentation to the Extent that such Documents are Included in the Fields Searched [8] |
|---|
| Jitsuyo Shinan Koho          1926 - 1989<br>Kokai Jitsuyo Shinan Koho    1971 - 1989 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 55-116529 (Dainippon Printing Co., Ltd.) 8 September 1980 (08. 09. 80) (Family: none) | 1-8 |
| Y | JP, A, 60-77814 (Honshu Paper Co., Ltd.) 2 May 1985 (02. 05. 85) (Family: none) | 1-8 |
| Y | JP, A, 56-41126 (Kishimoto Akira) 17 April 1981 (17. 04. 81) (Family: none) | 1-8 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 18, 1989 (18. 04. 89) | May 1, 1989 (01. 05. 89) |
| International Searching Authority | Signature of Authorized Officer |
| Japanese Patent Office | |

Form PCT·ISA·210 (second sheet) (January 1985)